# FASCICULE DE BREVET EUROPEEN

(11) **EP 2 651 272 B1**
(45) Date de publication et mention de la délivrance du brevet: **07.01.2015**
(21) Numéro de dépôt: 11817375.6
(22) Date de dépôt: 16.12.2011
(51) Int. Cl.: A47J 43/07

(54) **APPAREIL ÉLECTROMÉNAGER DE PRÉPARATION CULINAIRE COMPORTANT UN SOCLE SUPPORTANT UNE CUVE FERMÉE PAR UN COUVERCLE AMOVIBLE**
ELEKTRISCHE KÜCHENMASCHINE MIT EINEM SOCKEL FÜR EINE MIT EINEM ABNEHMBAREM DECKEL VERSCHLIESSBARE SCHÜSSEL
ELECTRIC HOUSEHOLD FOOD PROCESSOR COMPRISING A BASE SUPPORTING A BOWL THAT CAN BE CLOSED WITH A REMOVABLE LID

(30) Priorité: 17.12.2010 FR 1060761
(43) Date de publication de la demande: 23.10.2013
(73) Titulaire: SEB S.A., 69130 Ecully (FR)
(72) Inventeur: GUILMART, Philippe, F-53300 Saint-Mars-sur-Colmont (FR); LEMERCIER, Michel, F-53250 Javron-Les-Chapelles (FR); DOYEN, Nadine, F-53100 Mayenne (FR)
(74) Mandataire: Bourrières, Patrice
(86) Numéro de dépôt international: PCT/FR2011/053030
(87) Numéro de publication internationale: WO 2012/080679

(56) Documents cités:
- DE-U1-202006 014 145
- GB-A- 2 255 608
- US-B1- 6 435 708

## Description

La présente invention se rapporte au domaine technique général des appareils électroménagers de préparation culinaire comprenant un socle supportant une cuve fermée par un couvercle amovible et un moteur relié à des moyens d'entraînement de l'outil de travail. La présente invention se rapporte plus particulièrement à un appareil électroménager de préparation culinaire comportant un dispositif de sécurité empêchant le fonctionnement du moteur lorsque la cuve n'est pas fermée par le couvercle.

Il est connu, de la demande de brevet US 6 435 708, un appareil électroménager de préparation culinaire comprenant un socle supportant une cuve fermée par un couvercle amovible, un bras solidaire du socle supportant un outil de travail plongeant dans la cuve et un moteur relié à des moyens d'entraînement de l'outil de travail selon un mouvement planétaire. Ce document divulgue également la présence d'un dispositif de sécurité empêchant le fonctionnement du moteur lorsque la cuve n'est pas fermée par le couvercle. Un tel appareil présente l'avantage de procurer une grande sécurité d'utilisation en limitant l'accès à la cuve lors du fonctionnement de l'appareil.

Cependant, un tel appareil de préparation culinaire présente l'inconvénient de ne pas comporter d'entraîneur secondaire, distinct du dispositif d'entraînement planétaire, permettant l'accouplement d'accessoires variés tels un bol mélangeur, une filière à pâtes ou une tête hachoir.

Aussi, un but de la présente invention est de proposer un appareil électroménager de préparation culinaire comportant un outil de travail plongeant dans une cuve et un dispositif de sécurité empêchant le fonctionnement de l'appareil lorsque l'utilisateur souhaite utiliser l'outil de travail en l'absence d'un couvercle de fermeture sur la cuve mais comprenant également un ou plusieurs entraîneurs supplémentaires adaptés pour l'accouplement de divers accessoires de travail pouvant fonctionner en l'absence de la cuve sur le socle.

A cet effet, l'invention se rapporte à un appareil électroménager de préparation culinaire comportant un socle supportant une cuve fermée par un couvercle amovible, un bras solidaire du socle supportant un outil de travail plongeant dans la cuve, un moteur relié à des moyens d'entraînement de l'outil de travail et un dispositif de sécurité empêchant le fonctionnement du moteur lorsque le couvercle n'est pas présent sur la cuve, caractérisé en ce que le moteur est également relié à un entraîneur apte à être accouplé à un accessoire de travail, tel un récipient mélangeur, et en ce que l'appareil comporte un cache se fixant sous le bras en recouvrant les moyens d'entraînement de l'outil de travail, le cache comportant des moyens d'actionnement coopérant avec le dispositif de sécurité pour permettre le fonctionnement du moteur lorsque le cache est présent sur le bras.

Selon une autre caractéristique de l'invention, le cache comporte un dispositif de verrouillage assurant le maintien du cache sur le bras.

Selon encore une autre caractéristique de l'invention, le dispositif de verrouillage comprend deux crochets mobiles ramenés vers une position de verrouillage par des moyens de rappel et une poignée permettant de déplacer les crochets vers une position de déverrouillage.

Selon une autre caractéristique de l'invention, le bras est articulé sur le socle et est mobile en rotation entre une position de travail dans laquelle l'outil de travail est plongé dans la cuve et une position relevée facilitant l'accès à l'outil de travail et au contenu de la cuve.

Selon une autre caractéristique de l'invention, le dispositif de sécurité comporte un organe de sécurité mobile entre une position de repos, vers laquelle il est ramené par des moyens de rappel, et une position activée, vers laquelle il est déplacé lorsque le cache est monté sur le bras, l'organe de sécurité coopérant avec un interrupteur pour autoriser le fonctionnement du moteur uniquement lorsque l'organe de sécurité est en position activée.

Selon une autre caractéristique de l'invention, lesdits moyens d'actionnement comportent un élément venant déplacer l'organe de sécurité vers la position activée lorsque le cache est fixé sur le bras.

Selon une autre caractéristique de l'invention, l'organe de sécurité comporte des moyens de maintien permettant d'accoupler de manière amovible le, couvercle sur l'organe de sécurité.

Selon une autre caractéristique de l'invention, l'organe de sécurité est constitué par une tige de sécurité portée par le bras, la tige de sécurité étant mobile en translation à l'encontre d'un ressort.

Selon une autre caractéristique de l'invention, la cuve est amovible du socle.

Selon une autre caractéristique de l'invention, l'outil de travail est entraîné selon un mouvement de type planétaire.

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
- la figure 1 est une vue de côté d'un appareil de préparation culinaire selon un mode particulier de réalisation de l'invention, l'appareil étant représenté avec le bras en position relevée ;
- la figure 2 est une vue en perspective de l'appareil de la figure 1 sans la cuve, avec le bras en position de travail et le couvercle désaccouplé du bras de l'appareil ;
- la figure 3 est une vue de détail d'une tige de maintien équipant le bras de l'appareil ;
- la figure 4A est une vue en perspective du dispositif de sécurité représenté seul, la tige de sécurité étant en position de repos ;
- les figures 4B et 4C sont des vues de côté du dispositif de sécurité de la figure 4A, la tige de sécurité étant illustrée respectivement dans la position de repos et dans la position activée ;
- la figure 5 est une vue de côté de l'appareil de la figure 1 lorsque le bras est en position de travail ;
- la figure 6 est une semblable à la figure 5 lorsque la cuve n'est pas présente sur le socle de l'appareil ;
- la figure 7 est une vue en perspective d'un cache destiné à être monté sur le bras de l'appareil ;
- la figure 8 est une vue de dessus du cache de la figure 7 ;
- la figure 9 est une vue en perspective éclatée du dispositif de verrouillage équipant le cache de la figure 7 ;
- la figure 10 est une vue en perspective de l'appareil de la figure 1 équipé du cache de la figure 7;
- la figure 11 est une vue en coupe selon la ligne XI-XI de la figure 10.

Seuls les éléments nécessaires à la compréhension de l'invention ont été représentés. Pour faciliter la lecture des dessins, les mêmes éléments portent les mêmes références d'une figure à l'autre.

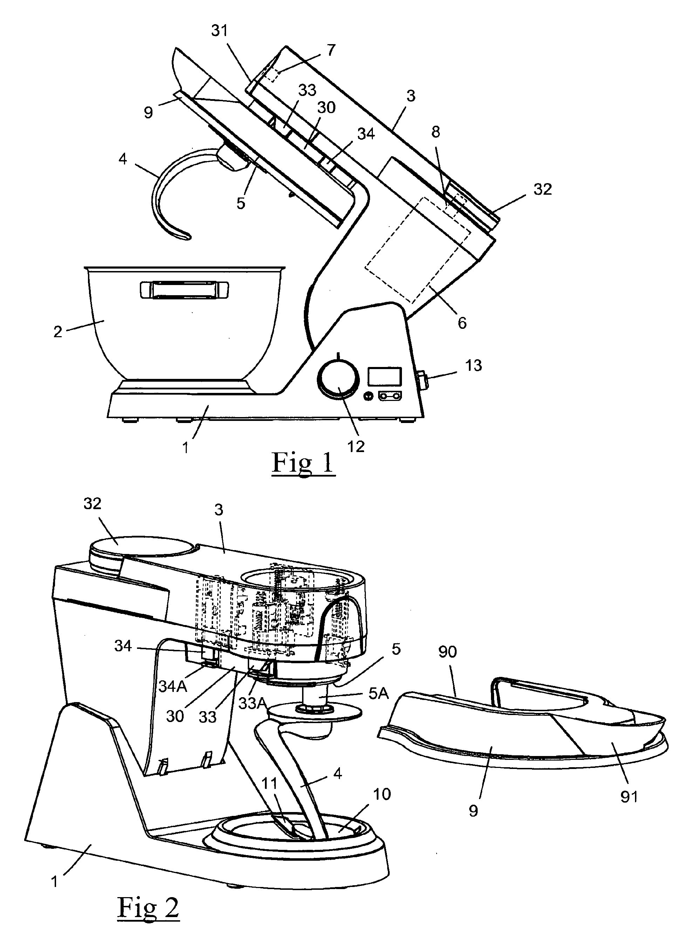

La figure 1 représente un appareil électroménager de préparation culinaire comprenant un socle 1 supportant une cuve 2 et un bras 3 articulé solidaire du socle 1, le bras 3 renfermant un moteur 6 électrique, illustré en pointillés sur la figure 1, dont la mise en marche et la vitesse sont contrôlées par un bouton de commande 12 disposé sur une face avant du socle 1.

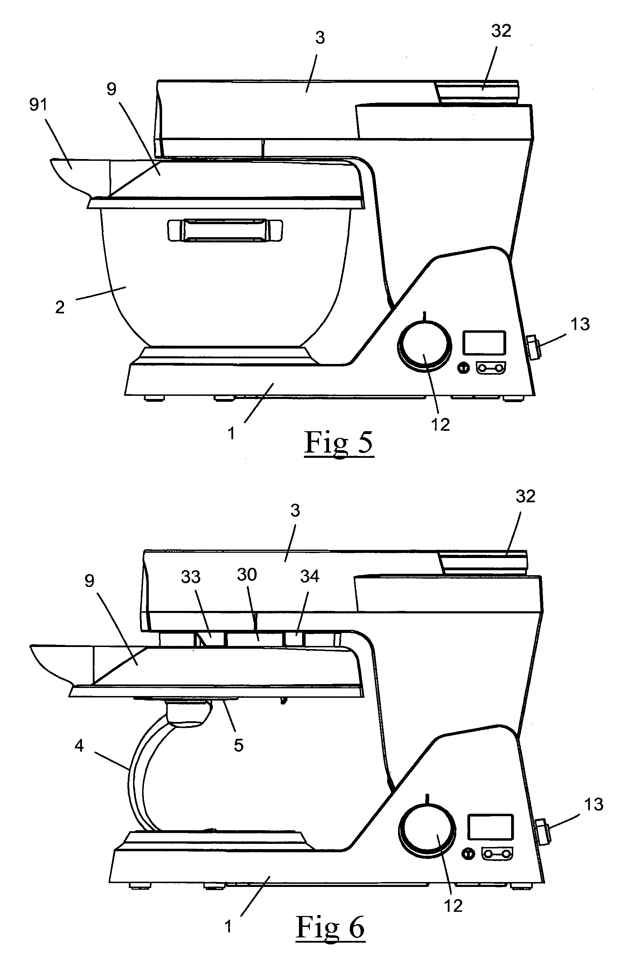

Le bras 3 est mobile en rotation selon un axe sensiblement horizontal entre une position relevée, telle qu'illustrée figure 1, dans laquelle la cuve 2 peut être facilement retirée du socle 1 et une position de travail, illustrée notamment sur les figures 2 et 5, dans laquelle le bras 3 comprend une extrémité libre s'étendant sensiblement horizontalement au-dessus de la cuve 2.

De manière avantageuse, l'appareil comporte un dispositif de verrouillage, connu en soi et non représenté sur les figures, immobilisant automatiquement le bras 3 lorsque ce dernier atteint la position relevée ou la position de travail, ainsi qu'un bouton de déverrouillage 13, disposé sur la face arrière du socle 1, devant être actionné pour permettre le déplacement du bras 3 d'une position à l'autre.

Conformément à la figure 2, l'extrémité libre du bras 3 comporte une platine inférieure 30 comprenant des moyens d'entraînement d'un outil de travail 4 destiné à être entraîné selon un mouvement planétaire à l'intérieur de la cuve 2. À cet effet, les moyens d'entraînement de l'outil de travail 4 comprennent un plateau 5 circulaire mobile en rotation autour de l'axe central du plateau 5 et une tourelle 5A excentrée contenant une bague, non représentée, assurant l'entraînement en rotation de l'outil de travail 4 sur lui-même, cet ensemble rotatif étant relié au moteur 6 par l'intermédiaire d'une chaîne cinématique mettant notamment en oeuvre un train d'engrenage épicycloïdal selon une conception très largement connue de l'homme du métier.

Le bras 3 comporte également, de manière connue en soi, un entraîneur rotatif 7 tournant à basses vitesses, illustré en pointillés sur la figure 1, masqué par un cache 31 disposé à l'extrémité avant du bras 3 et destiné à être accouplé à un accessoire, de type tête hachoir, ainsi qu'un entraîneur rotatif 8 tournant à hautes vitesses débouchant à l'extrémité supérieure arrière du bras 3 et destiné à être accouplé à un accessoire, de type bol mélangeur, cet entraîneur rotatif 8 tournant à hautes vitesses étant masqué par un capuchon 32 lorsqu'il n'est pas utilisé.

La cuve 2 est préférentiellement montée de manière amovible sur le socle 1 et comporte à cet effet une jupe inférieure comportant des ergots venant s'engager dans des rainures obliques 11 d'une empreinte 10 du socle 1, visibles sur la figure 2.

De manière préférentielle, le bras 3 supporte un couvercle 9 venant recouvrir la cuve 2 lorsque le bras 3 est en position de travail, le couvercle 9 comportant une paroi transparente en forme de U comprenant une échancrure 90 de forme adaptée pour s'engager longitudinalement autour de la platine inférieure 30 du bras 3 et comprenant avantageusement un orifice de faible dimension au fond d'un entonnoir 91 pour permettre l'introduction d'ingrédients à l'intérieur de la cuve 2 sans ôter le couvercle 9.

Le couvercle 9 est supporté par deux tiges de maintien 33 disposées symétriquement de part et d'autre de l'axe longitudinal du bras 3, à proximité de l'extrémité avant de la platine inférieure 30, et par deux tiges de sécurité 34 disposées symétriquement de part et d'autre de l'axe longitudinal du bras 3, à proximité de l'extrémité arrière de la platine inférieure 30, les deux tiges de maintien 33 et les deux tiges de sécurité 34 s'étendant majoritairement à l'intérieur du bras 3 et comportant une extrémité inférieure faisant saillie sur des parois latérales de la platine inférieure 30.

Les extrémités inférieures des tiges de maintien 33 et des tiges de sécurité 34 présentent une rainure 33A, 34A dans laquelle vient s'engager un bord de l'échancrure 90 lorsque le couvercle 9 est monté sur le bras 3 par un mouvement de translation longitudinale, la rainure 33A des tiges de maintien 33 présentant une extrémité avant évasée pour faciliter l'engagement du couvercle 9.

Les deux tiges de maintien 33 et les deux tiges de sécurité 34 sont mobiles en translation entre une position basse, dite position de repos, illustrée sur les figures 1, 2 et 6, vers laquelle elles sont ramenées par des moyens de rappel, et une position haute, illustrée sur la figure 5, vers laquelle elles sont déplacées sous la pression exercée par le bord supérieur de la cuve 2 lorsque le couvercle 9 vient reposer sur la cuve 2 lors du déplacement du bras 3 vers la position de travail.

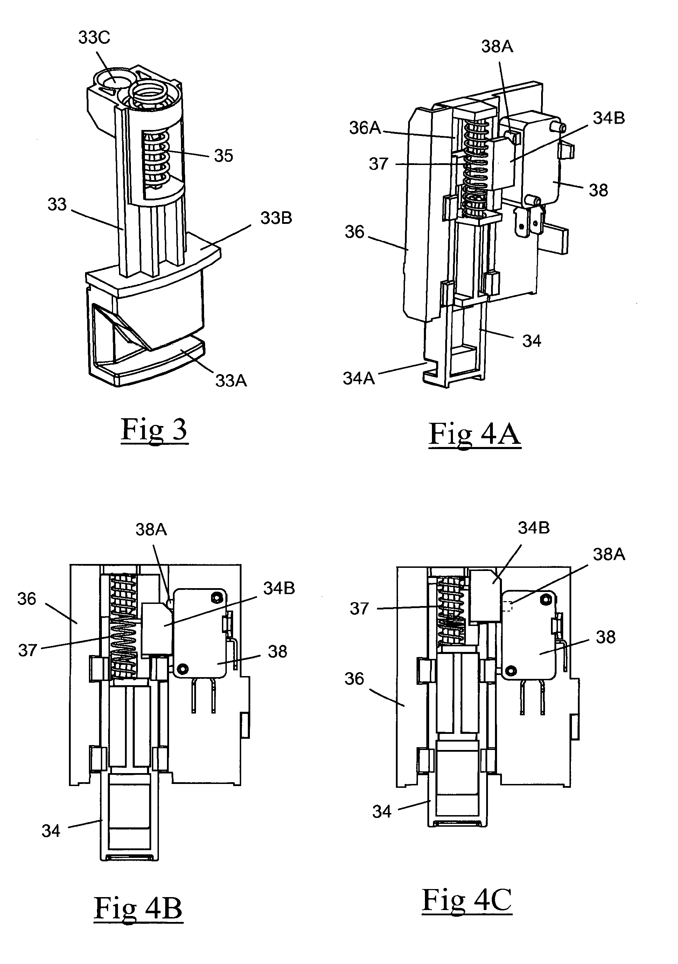

Conformément à la figure 3 représentant isolément l'une des tiges de maintien 33, les moyens de rappel de la tige de maintien 33 sont avantageusement constitués par un ressort 35, la tige de maintien comportant un épaulement 33B formant une butée venant coopérer avec une paroi du bras 3 pour immobiliser la tige en position de repos, et comportant un orifice 33C venant coulisser le long d'un axe de guidage, non représenté sur les figures.

Conformément aux figures 4A à 4C, la tige de sécurité 34 est rattachée à un dispositif de sécurité, représenté isolément sur ces figures, comprenant un bâti 36 monté verticalement à l'intérieur du bras 3, le bâti 36 comportant un rail de guidage 36A dans lequel la tige de sécurité 34 est monté coulissante à l'encontre d'un ressort 37. Le ressort 37 ramène automatiquement la tige de sécurité 34 dans une position dans laquelle l'extrémité inférieure de la tige de sécurité 34 est en butée contre une paroi de blocage 30A faisant saillie à la base de la paroi latérale de la platine inférieure 30, cette position correspondant à la position de repos de la tige de sécurité 34.

L'extrémité supérieure de la tige de sécurité 34 supporte une came 34B destinée à coopérer avec un interrupteur de sécurité 38 porté par le bâti 36 et faisant partie intégrante d'un circuit d'alimentation du moteur 6, l'interrupteur de sécurité 38 étant disposé de telle sorte que, lorsque la tige de sécurité 34 est dans la position de repos illustrée sur les figures 4A et 4B, la came 34B n'exerce pas de pression sur un actionneur 38A de l'interrupteur de sécurité 38 de sorte que ce dernier se trouve dans un état ouvert empêchant l'alimentation électrique du moteur 6.

A l'inverse, lorsque la tige de sécurité 34 est déplacée vers la position haute illustrée sur la figure 4C, dite position activée, la came 34B presse l'actionneur 38A de sorte que l'interrupteur de sécurité 38 se trouve dans un état fermé permettant l'alimentation du moteur 6.

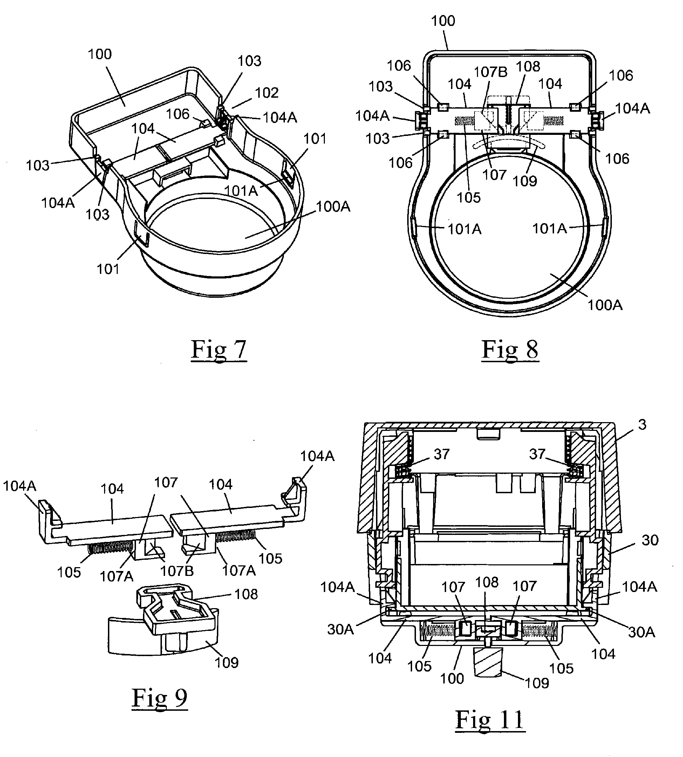

Plus particulièrement selon l'invention, l'appareil comporte un cache 100, illustré sur les figures 7 et 8, destiné à être monté sur le bras 3 de l'appareil afin de permettre le fonctionnement de l'appareil lorsque l'utilisateur utilise un accessoire s'accouplant à l'un des entraîneurs rotatifs 7,8 sans être obligé de mettre en place la cuve 2 sur le socle 1 et le couvercle 9 sur le bras 3 de l'appareil.

Conformément à ces figures, le cache 100 comporte un corps creux présentant une forme complémentaire de la platine inférieure 30 du bras 3 de l'appareil, le cache 100 comportant des parois latérales venant s'engager autour des parois latérales de la platine inférieure 30 du bras 3 et un fond muni notamment d'une empreinte circulaire 100A adaptée pour venir recouvrir le plateau 5 circulaire comprenant la tourelle 5A destinée à recevoir l'outil de travail 4.

Les parois latérales du cache 100 comportent deux languettes élastiques 101 munies d'un bossage 101A adapté pour s'engager élastiquement dans la rainure 33A des tiges de maintien 33 lorsque le cache 100 est amené par un mouvement vertical, de bas en haut, sous la platine inférieure 30, les languettes élastiques 101 étant suffisamment souples pour que l'engagement du bossage 101A dans la rainure 33A s'effectue sans engendrer de remontée notable des tiges de maintien 33 à l'encontre de leur ressort de rappel 35.

Les parois latérales du cache 100 comportent également deux découpes 102, disposées en vis-à-vis, venant à hauteur des tiges de sécurité 34 lorsque le cache 100 est montée sur la platine inférieure 30, chaque découpe 102 comportant un épaulement 103 venant s'appuyer contre l'extrémité inférieure de la tige de sécurité 34 de manière à soulever la tige de sécurité 34 vers sa position activée lorsque le cache 100 est monté sur la platine inférieure 30.

De manière préférentielle, le cache 100 est immobilisé dans cette position sur la platine inférieure 30 du bras au moyen d'un dispositif de verrouillage constitué par deux crochets 104, en vis-à-vis, pouvant coulisser transversalement à l'intérieur du cache 100, les deux crochets 104 comprenant une tête de verrouillage 104A venant respectivement se positionner dans les deux découpes 102 de la paroi latérale, sous l'épaulement 103, les deux crochets 104 étant ramenés par des ressorts de rappel 105 dans une position de verrouillage dans laquelle les têtes de verrouillage 104A s'engagent sous les tiges de sécurité 34 et se verrouillent sur la paroi de blocage 30A, ainsi que cela est illustré sur la figure 11, lorsque le cache 100 est monté sur la platine inférieure 30.

Conformément aux figures 8 et 9, les deux crochets 104 comportent un corps plat allongé qui est guidé par des pattes de maintien 106, visibles sur la figure 8, le corps supportant un plot d'actionnement 107 comportant, d'un côté, une face 107A sur laquelle vient prendre appui le ressort de rappel 105 et, de l'autre côté, un plan incliné 107B contre lequel vient prendre appui une pièce d'écartement 108 pouvant coulisser transversalement aux crochets 104.

La pièce d'écartement 108 est solidaire d'une manette d'actionnement 109 accessible depuis l'extérieur du cache 100, cette manette 109 comportant une partie de préhension circulaire épousant la courbure de la forme de l'empreinte 100A circulaire du cache et pouvant être déplacée, sur une course de l'ordre d'un centimètre, en direction de l'empreinte 100A pour que la pièce d'écartement 108 agisse sur les crochets 104 et déplace ces derniers, à l'encontre de leur ressort de rappel 105, vers une position de déverrouillage dans laquelle l'écartement des crochets 104 permet le retrait du cache 100 de la partie inférieure 30 du bras.

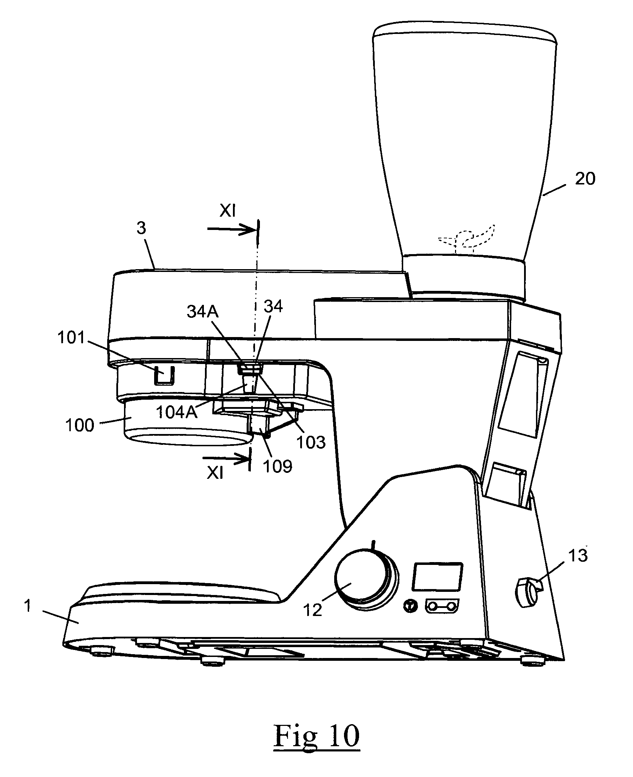

La figure 10 illustre l'appareil avec le cache 100 monté sur la platine inférieure 30 du bras afin de permettre l'utilisation de l'appareil avec un bol mélangeur 20, de type bol blender, accouplé sur l'entraîneur 8 tournant à hautes vitesses de l'appareil. Conformément à cette figure, le cache 100 monté sur le bras permet le maintien des tiges de sécurité 34 dans leur position activée de sorte que le fonctionnement du moteur 6 de l'appareil est autorisé si l'utilisateur met en marche l'appareil au moyen du bouton de commande 12. Dans cette configuration d'utilisation, il n'y a alors aucun risque de blessure par contact avec le plateau 5 d'entraînement selon un mouvement planétaire étant donné que ce plateau 5 est masqué par le cache 100 et donc inaccessible à l'utilisateur.

Un tel cache 100 permet donc l'utilisation en toute sécurité de l'appareil avec les entraîneurs rotatifs 7, 8 de l'appareil et ceci sans être obligé de disposer la cuve 2 sur le socle 1 et le couvercle 9 sur le bras 3.

Lorsque l'utilisateur a de nouveau besoin d'utiliser un outil devant être accouplé à la tourelle 5A de le plateau 5, il lui suffit d'ôter le cache 100 en actionnant la manette 109 et en tirant le cache 100 vers le bas.

L'appareil électroménager de préparation culinaire ainsi équipé présente l'avantage de posséder un grande sécurité d'utilisation lorsqu'il est utilisé avec l'outil de travail 4 plongeant dans la cuve 2 étant donné que le moteur 6 de l'appareil ne peut fonctionner que lorsque les deux tiges de sécurité 34 se trouvent amenées en position activée, c'est-à-dire lorsque le couvercle 9 se trouve déplacé en direction du bras 3 articulé par la pression exercée par la cuve 2 quand le bras 3 muni de son couvercle 9 est abaissé en position de travail, ainsi que cela est illustré sur la figure 5, les deux tiges de maintien 33 coopérant avec les deux tiges de sécurité 34 pour assurer un bon maintien du couvercle 9 sur le bras 3.

En particulier, l'appareil ne peut pas fonctionner en l'absence de la cuve 2 lorsque le bras 3 de l'appareil, équipé du couvercle 9, est placé en position de travail, ainsi que cela est illustré sur la figure 6. En effet, dans ce cas, les deux tiges de sécurité 34 se trouvent ramenées par leur ressort 37 de rappel dans la position de repos, étant donné qu'aucune pression n'est exercée sous le couvercle 9, et les interrupteurs de sécurité 38 se trouvent à l'état ouvert, empêchant le fonctionnement du moteur 6. La même impossibilité de fonctionnement du moteur 6 se produit lorsque la cuve 2 est présente sur le socle 1 et que le couvercle 9 est absent du bras 3 articulé.

L'appareil ne peut pas non plus fonctionner lorsque le bras 3 de l'appareil se trouve dans la position relevée, illustrée à la figure 1, étant donné que, dans ce cas également, les tiges de sécurité 34 se trouvent en position de repos puisque aucune pression n'est exercée sous le couvercle 9.

Par ailleurs, la présence de deux tiges de sécurité 34 réparties de part et d'autre de l'appareil et associées chacune à un interrupteur de sécurité 38 permet de garantir une sécurité renforcée de l'appareil en empêchant le fonctionnement de l'appareil lorsqu'une seule des tiges de sécurité 34 est déplacée dans la position activée, ce qui pourrait éventuellement se produire si l'utilisateur manipule l'une de ces tiges de sécurité 34 en l'absence du couvercle 9.

Un tel appareil présente également l'avantage de posséder un couvercle 9 qui est maintenu sous contrainte contre la cuve 2, par les efforts générés par les ressorts 35, 37 de rappel des tiges de maintien 33 et des tiges de sécurité 34, de sorte que la cuve 2 est plaquée contre le socle 1, ce qui permet de réduire les vibrations, et donc les nuisances sonores, générées au niveau du couvercle 9 et de la cuve 2. De plus, l'appareil peut, grâce à ce dispositif, s'affranchir de tout dispositif de verrouillage de la cuve 2 sur le socle 1 pour une plus grande ergonomie d'utilisation.

L'ergonomie d'utilisation de l'appareil est également optimisée grâce au rattachement du couvercle 9 au bras 3 articulé qui permet d'accéder directement au contenu de la cuve 2 et à l'outil de travail 4 par le simple basculement du bras 3 vers la position relevée, illustrée à la figure 1, sans avoir à manipuler le couvercle 9.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Ainsi, dans une variante de réalisation non représentée, le dispositif de verrouillage du cache pourra être porté par le bras.

## Revendications

1. Appareil électroménager de préparation culinaire comportant un socle (1) supportant une cuve (2) fermée par un couvercle (9) amovible, un bras (3) solidaire du socle (1) supportant un outil de travail (4) plongeant dans la cuve (2), un moteur (6) relié à des moyens d'entraînement (5, 5A) de l'outil de travail (4) et un dispositif de sécurité empêchant le fonctionnement du moteur (6) lorsque le couvercle (9) n'est pas présent sur la cuve (2), **caractérisé en ce que** ledit moteur (6) est également relié à un entraîneur (7, 8) apte à être accouplé à un accessoire de travail (20), tel un récipient mélangeur, et **en ce que** l'appareil comporte un cache (100) se fixant sous le bras (3) en recouvrant lesdits moyens d'entraînement (5, 5A) de l'outil de travail (4), ledit cache (100) comportant des moyens d'actionnement (103) coopérant avec le dispositif de sécurité pour permettre le fonctionnement du moteur (6) lorsque le cache (100) est présent sur le bras (3).

2. Appareil électroménager de préparation culinaire selon la revendication 1, **caractérisé en ce que** le cache (100) comporte un dispositif de verrouillage assurant le maintien du cache (100) sur le bras (3).

3. Appareil électroménager de préparation culinaire selon la revendication 2, **caractérisé en ce que** le dispositif de verrouillage comprend deux crochets (104) mobiles ramenés vers une position de verrouillage par des moyens de rappel (105) et une manette (109) permettant de déplacer lesdits crochets (104) vers une position de déverrouillage.

4. Appareil électroménager de préparation culinaire selon l'une quelconque des revendications 1 à 3, **caractérisé en ce que** ledit bras (3) est articulé sur le socle (1) et est mobile en rotation entre une position de travail dans laquelle l'outil de travail (4) est plongé dans la cuve et une position relevée facilitant l'accès à l'outil de travail (4) et au contenu de la cuve (2).

5. Appareil électroménager de préparation culinaire selon l'une quelconque des revendications 1 à 4, **caractérisé en ce que** le dispositif de sécurité comporte un organe de sécurité (34) mobile entre une position de repos, vers laquelle il est ramené par des moyens de rappel (37) et une position activée, vers laquelle il est déplacé lorsque le cache (100) est monté sur le bras, ledit organe de sécurité (34) coopérant avec un interrupteur (38) pour autoriser le fonctionnement du moteur (6) uniquement lorsque l'organe de sécurité (34) est en position activée.

6. Appareil électroménager de préparation culinaire selon la revendication 5, **caractérisé en ce que** lesdits moyens d'actionnement comportent un élément (103) venant déplacer l'organe de sécurité (34) vers la position activée lorsque le cache (100) est fixé sur le bras (3).

7. Appareil électroménager de préparation culinaire selon la revendication 6, **caractérisé en ce que** ledit organe de sécurité (34) comporte des moyens de maintien (34A) permettant d'accoupler de manière amovible le couvercle (9) sur ledit organe de sécurité (34).

8. Appareil électroménager de préparation culinaire selon l'une quelconque des revendications 5 à 7, **caractérisé en ce que** l'organe de sécurité (34) est constitué par une tige de sécurité portée par le bras (3), la tige de sécurité (34) étant mobile en translation à l'encontre d'un ressort (37).

9. Appareil électroménager de préparation culinaire selon l'une quelconque des revendications 1 à 8, **caractérisé en ce que** la cuve (2) est amovible du socle (1).

10. Appareil électroménager de préparation culinaire selon l'une quelconque des revendications 1 à 9, **caractérisé en ce que** l'outil de travail (4) est entraîné selon un mouvement de type planétaire.

## Patentansprüche

1. Elektrohaushaltsgerät zur Zubereitung von Speisen, das einen Sockel (1), der einen durch einen abnehmbaren Deckel (9) verschlossenen Behälter (2) trägt, einen mit dem Sockel (1) verbundenen Arm (3), der ein Arbeitswerkzeug (4) trägt, das in den Behälter (2) hineinragt, einen Motor (6), der mit Antriebsmitteln (5, 5A) des Arbeitswerkzeugs (4) verbunden ist, und eine Sicherheitsvorrichtung, die den Betrieb des Motors (6) verhindert, wenn sich der Deckel (9) nicht auf dem Behälter (2) befindet, umfasst, **dadurch gekennzeichnet, dass** der genannte Motor (6) weiterhin mit einem Mitnehmer (7, 8) verbunden ist, der mit einem Arbeitszubehörteil (20), wie etwa einem Rührgefäß, gekoppelt werden kann, und dass das Gerät eine Abdeckung (100) umfasst, die unter dem Arm (3) befestigt wird und die genannten Antriebsmittel (5, 5A) des Arbeitswerkzeugs (4) bedeckt, wobei die genannte Abdeckung (100) Betätigungsmittel (103) umfasst, die mit der Sicherheitsvorrichtung zusammenwirken und den Betrieb des Motors (6) zulassen, wenn sich die Abdeckung (100) auf dem Arm (3) befindet.

2. Elektrohaushaltsgerät zur Zubereitung von Speisen nach Anspruch 1, **dadurch gekennzeichnet, dass** die Abdeckung (100) eine Verriegelungsvorrichtung umfasst, die sicherstellt, dass die Abdeckung (100) an ihrem Platz auf dem Arm (3) gehalten wird.

3. Elektrohaushaltsgerät zur Zubereitung von Speisen nach Anspruch 2, **dadurch gekennzeichnet, dass** die Verriegelungsvorrichtung zwei bewegliche Haken (104), die von Rückstellmitteln (105) in eine Verriegelungsstellung gebracht werden, und einen Bedienungshebel (109) umfasst, mit dem die genannten Haken (104) in eine Entriegelungsstellung bewegt werden können.

4. Elektrohaushaltsgerät zur Zubereitung von Speisen nach einem der Ansprüche 1 bis 3, **dadurch gekennzeichnet, dass** der genannte Arm (3) gelenkig auf dem Sockel (1) sitzt und zwischen einer Arbeitsstellung, in der das Arbeitswerkzeug (4) in den Behälter ragt, und einer abgehobenen Stellung drehbar ist, die den Zugang zu dem Arbeitswerkzeug (4) und dem Inhalt des Behälters (2) erleichtert.

5. Elektrohaushaltsgerät zur Zubereitung von Speisen nach einem der Ansprüche 1 bis 4, **dadurch gekennzeichnet, dass** die Sicherheitsvorrichtung ein Sicherheitselement (34) umfasst, das sich zwischen einer Ruhestellung, in die es von Rückstellmitteln (37) gebracht wird, und einer aktivierten Stellung, in die es gebracht wird, wenn die Abdeckung (100) auf dem Arm montiert wird, bewegen lässt, wobei das genannte Sicherheitselement (34) mit einem Schalter (38) zusammenwirkt, der den Betrieb des Motors (6) nur zulässt, wenn sich das Sicherheitselement (34) in der aktivierten Stellung befindet.

6. Elektrohaushaltsgerät zur Zubereitung von Speisen nach Anspruch 5, **dadurch gekennzeichnet, dass** die genannten Betätigungsmittel ein Bauteil (103) umfassen, das das Sicherheitselement (34) in die aktivierte Stellung bringt, wenn die Abdeckung (100) auf dem Arm (3) fixiert ist.

7. Elektrohaushaltsgerät zur Zubereitung von Speisen nach Anspruch 6, **dadurch gekennzeichnet, dass** das genannte Sicherheitselement (34) Haltemittel (34A) umfasst, die es gestatten, den Deckel (9) abnehmbar mit dem genannten Sicherheitselement (34) zu koppeln.

8. Elektrohaushaltsgerät zur Zubereitung von Speisen nach einem der Ansprüche 5 bis 7, **dadurch gekennzeichnet, dass** das Sicherheitselement (34) aus einem Sicherheitsstift besteht, der von dem Arm (3) getragen wird, wobei der Sicherungsstift (34) entlang einer Feder (37) verschiebbar ist.

9. Elektrohaushaltsgerät zur Zubereitung von Speisen nach einem der Ansprüche 1 bis 8, **dadurch gekennzeichnet, dass** der Behälter (2) vom Sockel (1) abnehmbar ist.

10. Elektrohaushaltsgerät zur Zubereitung von Speisen nach einem der Ansprüche 1 bis 9, **dadurch gekennzeichnet, dass** das Arbeitswerkzeug (4) in einer Planetenbewegung angetrieben wird.

## Claims

1. Food preparation household electrical appliance comprising a base (1) supporting a bowl (2) closed by a removable lid (9), an arm (3) attached to the base (1) supporting a working tool (4) dipping into the bowl (2), a motor (6) connected to means (5, 5A) for driving the working tool (4) and a safety device preventing the motor (6) from operating when the lid (9) is not present on the bowl (2), **characterised in that** said motor (6) is also connected to a driver (7, 8) adapted to be coupled to a working accessory (20), such as a mixing receptacle, and **in that** the appliance comprises a cover (100) attached underneath the arm (3) covering said means (5, 5A) for driving the working tool (4), said cover (100) comprising actuation means (103) cooperating with the safety device to allow the motor (6) to operate when the cover (100) is present on the arm (3).

2. Food preparation household electrical appliance according to claim 1, **characterised in that** the cover (100) comprises a locking device holding the cover (100) on the arm (3).

3. Food preparation household electrical appliance according to claim 2, **characterised in that** the locking device comprises two mobile hooks (104) moved back into a locking position by return means (105) and a lever (109) for moving said hooks (104) into an unlocking position.

4. Food preparation household electrical appliance according to any of claims 1 to 3, **characterised in that** said arm (3) is hinged on the base (1) and can be rotated between a working position in which the working tool (4) is dipped into the bowl and a raised position facilitating access to the working tool (4) and the content of the bowl (2).

5. Food preparation household electrical appliance according to any of claims 1 to 4, **characterised in that** the safety device comprises a safety member (34) movable between a rest position, towards which it is moved back by return means (37) and an activated position to which it is moved when the cover (100) is mounted on the arm, said safety member (34) cooperating with a switch (38) to allow the motor (6) to operate only when the safety member (34) is in the activated position.

6. Food preparation household electrical appliance according to claim 5, **characterised in that** said actuating means comprise a member (103) moving the safety member (34) to the activated position when the cover (100) is fixed to the arm (3).

7. Food preparation household electrical appliance according to claim 6, **characterised in that** said safety member (34) comprises holding means (34A) for removably coupling the lid (9) to said safety member (34).

8. Food preparation household electrical appliance according to any of claims 5 to 7, **characterised in that** the safety member (34) consists of a safety rod carried by the arm (3), the safety rod (34) being movable in translation against a spring (37).

9. Food preparation household electrical appliance according to any of claims 1 to 8, **characterised in that** the bowl (2) is removable from the base (1).

10. Food preparation household electrical appliance according to one of claims 1 to 9, **characterised in that** the working tool (4) is driven in planetary type motion.
